# EUROPÄISCHE PATENTSCHRIFT

(11) **EP 3 792 533 B1**
(45) Veröffentlichungstag und Bekanntmachung des Hinweises auf die Patenterteilung: **30.10.2024**
(21) Anmeldenummer: 20194109.3
(22) Anmeldetag: 02.09.2020
(51) Int. Cl.: F16K 21/10, F16K 21/14, F16K 31/08, F16K 31/385, F16K 35/16, E03C 1/042, F16K 35/06

(54) **SELBSTSCHLUSSVENTILVORRICHTUNG**
SELF-CLOSING VALVE DEVICE
VANNE À FERMETURE AUTOMATIQUE

(30) Priorität: 12.09.2019 DE 102019213947
(43) Veröffentlichungstag der Anmeldung: 17.03.2021
(73) Patentinhaber: Hansgrohe SE, 77761 Schiltach (DE)
(72) Erfinder: Dold, Florian, 77716 Hofstetten (DE); Meier, Fridolin, 77709 Oberwolfach (DE)
(74) Vertreter: Patentanwälte Ruff, Wilhelm, Beier, Dauster & Partner mbB

(56) Entgegenhaltungen:
- EP-A2- 1 293 713
- CH-A- 315 544
- FR-A1- 2 713 735
- JP-A- S5 380 018
- US-A- 3 540 481
- US-A- 3 840 041
- US-A- 3 842 857
- US-A- 4 522 226
- US-A- 5 046 523

## Beschreibung

Die Erfindung bezieht sich auf eine Selbstschlussventilvorrichtung nach dem Oberbegriff des Anspruchs 1.

Eine solche Selbstschlussventilvorrichtung weist eine Ventilschließkörpereinheit, die zwischen einer Ventilschließstellung und einer Ventiloffenstellung beweglich angeordnet ist, und eine Ventilbetätigungseinheit auf, die zwischen einer Schließstellung, in der sie die Ventilschließkörpereinheit in deren Ventilschließstellung hält, und einer Öffnungsstellung beweglich angeordnet ist, in der sie die Ventilschließkörpereinheit in der Ventiloffenstellung hält, wobei sich die Ventilbetätigungseinheit nutzerbetätigt von ihrer Schließstellung in ihre Öffnungsstellung und in einer Normalbetriebsart der Selbstschlussventilvorrichtung selbsttätig von ihrer Öffnungsstellung in ihre Schließstellung bewegt.

Selbstschlussventilvorrichtungen zeichnen sich dadurch aus, dass sie in einem normalen Betrieb, d.h. in einer Normalbetriebsart, selbsttätig schließen, d.h. ihre Schließstellung selbsttätig einnehmen, ohne dass der Benutzer dazu das Ventil betätigen muss. Sie verbleiben stationär, d.h. andauernd, in dieser Schließstellung, bis sie vom Benutzer wieder geöffnet werden. Aufgrund der Selbstschlussfunktionalität verbleibt das Ventil nur temporär in der Offenstellung. Dementsprechend werden derartige Ventilvorrichtungen typischerweise in Anwendungen eingesetzt, bei denen automatisch dafür gesorgt werden soll, dass durch die Ventilvorrichtung ein von ihr in seiner Fluiddurchflussmenge regulierter Fluidweg selbsttätig wieder geschlossen wird, ohne dass es dazu einer Schließbetätigung durch den Benutzer bedarf, nachdem der Benutzer zuvor die Ventilvorrichtung in ihre Offenstellung gebracht hat. Selbstschlussventilvorrichtungen werden beispielsweise in sanitären Anwendungen als reine Absperrventilvorrichtungen zum wahlweisen Absperren oder Durchlassen eines Fluids, insbesondere Wasser, oder als Misch- und Absperrventilvorrichtungen zum kontrollierten Mischen zweier Fluide, wie Kaltwasser und Warmwasser, und kontrollierten Abgeben eines entsprechenden Mischfluids verwendet.

Mit dem Begriff Ventilschließstellung ist vorliegend die geschlossene Stellung der Ventilschließkörpereinheit und damit der Selbstschlussventilvorrichtung insgesamt gemeint, in der die Ventilschließkörpereinheit und damit die Selbstschlussventilvorrichtung insgesamt die Abgabe von eingangsseitig zuführbarem Fluid absperrt, d.h. an einem entsprechenden Fluidauslauf kein Fluid abgibt. Mit dem Begriff Ventiloffenstellung ist vorliegend eine Stellung der Ventilschließkörpereinheit und damit der Selbstschlussventilvorrichtung insgesamt gemeint, in der die Ventilschließkörpereinheit und damit die Selbstschlussventilvorrichtung insgesamt den von ihr in ihrem Durchlassquerschnitt bzw. ihrer Fluiddurchlassmenge regulierbaren Fluidströmungsweg wenigstens teilweise, d.h. vollständig oder teilweise, offen hält. Mit anderen Worten umfasst vorliegend der Begriff Offenstellung bzw. Ventiloffenstellung jegliche wenigstens teilgeöffnete Stellung der Ventilschließkörpereinheit bzw. der Selbstschlussventilvorrichtung, sei es die Volloffenstellung mit voll geöffnetem Fluidströmungsweg oder eine beliebige Teiloffenstellung mit nur teilgeöffnetem Fluidströmungsweg.

Mit dem Begriff stationäre Schließstellung ist vorliegend eine bleibende, andauernde Schließstellung der Ventilbetätigungseinheit gemeint, in der die Ventilbetätigungseinheit bleibt, solange sie vom Benutzer nicht in eine andere Stellung verbracht wird. Solange die Ventilbetätigungseinheit in ihrer Schließstellung ist, befindet sich entsprechend die Ventilschließkörpereinheit und damit die Selbstschlussventilvorrichtung insgesamt in der Ventilschließstellung.

Mit dem Begriff temporäre Öffnungsstellung der Ventilbetätigungseinheit ist vorliegend gemeint, dass die Ventilbetätigungseinheit ohne Nutzerinteraktion nicht dauerhaft in ihrer Öffnungsstellung verbleibt, sondern nur temporär, d.h. zeitweise, für eine gewisse, vorzugsweise definiert vorgebbare Zeitdauer, nach deren Ablauf die Ventilbetätigungseinheit selbsttätig von ihrer temporären Öffnungsstellung in ihre stationäre Schließstellung gelangt, entsprechend der Selbstschlussfunktionalität der Selbstschlussventilvorrichtung. Dementsprechend gelangt die Ventilschließkörpereinheit und damit die Selbstschlussventilvorrichtung insgesamt in der Normalbetriebsart, nachdem sie vom Benutzer aus ihrer Ventilschließstellung in ihre Ventiloffenstellung gebracht wurde, ohne Nutzerinteraktion selbsttätig wieder in ihre Ventilschließstellung zurück.

Selbstschlussventilvorrichtungen dieser Art in der Ausführung vom erwähnten Misch- und Absperrventiltyp sind in den Offenlegungsschriften DE 10 2014 113 386 A1 und EP 2 998 623 A1 offenbart. Selbstschlussventilvorrichtungen der eingangs genannten Art in der Ausführung vom erwähnten reinen Absperrventiltyp sind in den Offenlegungsschriften DE 38 35 497 A1 und DE 10 2007 011 199 A1 sowie in der Patentschrift DE 43 22 289 C1 und der älteren Patentanmeldung DE 10 2018 204 147.4 der Anmelderin offenbart.

Die gattungsgemäße Selbstschlussventilvorrichtung weist zusätzlich eine Blockiereinheit auf, die nutzerbetätigt zwischen einer Freigabestellung, in der sie die selbsttätige Bewegung der Ventilbetätigungseinheit von deren Öffnungsstellung in deren Schließstellung freigibt, und einer Blockierstellung verlagerbar ist, in der sie die selbsttätige Bewegung der Ventilbetätigungseinheit von deren Öffnungsstellung in deren Schließstellung in einer Festhaltestellung blockiert, in der die Ventilbetätigungseinheit in einer Sonderbetriebsart der Selbstschlussventilvorrichtung die Ventilschließkörpereinheit in einer Sonderbetrieb-Ventiloffenstellung hält.

Aufgrund dieses zusätzlichen Merkmals besitzt die gattungsgemäße Selbstschlussventilvorrichtung eine gegenüber anderweitigem Stand der Technik, wie in den oben genannten Druckschriften, erweiterte Funktionalität. Insbesondere ist bei dieser Selbstschlussventilvorrichtung die Fähigkeit, im Normalbetrieb selbsttätig aus ihrer temporären Offenstellung in ihre stationäre Schließstellung zu gelangen, mit der Fähigkeit kombiniert, bei Bedarf in einer Sonderbetriebsart betrieben werden zu können, in der sie eine Offenstellung beibehält. Dazu hält die Ventilbetätigungseinheit in dieser Sonderbetriebsart die Ventilschließkörpereinheit in der entsprechenden Sonderbetrieb-Ventiloffenstellung. Bei der Sonderbetrieb-Ventiloffenstellung kann es sich vorzugsweise um eine Volloffenstellung der Ventilvorrichtung handeln, alternativ um eine Teiloffenstellung.

Durch entsprechende Betätigung der Blockiereinheit kann der Benutzer die Ventilbetätigungseinheit in ihre Blockierstellung verbringen und dadurch die entsprechende Sonderbetriebsart aktivieren, indem die Ventilbetätigungseinheit dann die Ventilschließkörpereinheit in der Sonderbetrieb-Ventiloffenstellung hält, was bedeutet, dass die Ventilschließkörpereinheit ihre Ventiloffenstellung beibehält, solange der Benutzer keine anderweitige Ventilbetätigung vornimmt. In der Sonderbetrieb-Ventiloffenstellung der Ventilschließkörpereinheit befindet sich entsprechend die Selbstschlussventilvorrichtung stationär, d.h. bleibend, in ihrer Offenstellung, bei der es sich je nach Bedarf und Anwendungsfall um die Volloffenstellung oder eine Teiloffenstellung handeln kann.

Diese Zusatzfunktionalität ist insbesondere für Anwendungen von Vorteil, bei denen in einer bestimmten Anwendungssituation gewünscht ist, dass die Ventilvorrichtung entgegen ihrer grundsätzlichen Selbstschlussfunktionalität ihre Offenstellung stationär beibehält, bis sie vom Benutzer wieder in den Normalbetrieb zurückgestellt wird, in welchem sie gemäß ihrer Selbstschlussfunktionalität selbsttätig aus ihrer Offenstellung in ihre Schließstellung gelangt. Als eine nützliche Anwendung ermöglicht diese Zusatzfunktionalität in der Sonderbetriebsart eine bleibende Abgabe des von der Ventilvorrichtung in ihrer Abgabemenge regulierten Fluids, ohne dass die Ventilvorrichtung in diesem Fall die Fluidabgabe aufgrund ihrer grundsätzlichen Selbstschlussfunktionalität nach einer gewissen Zeitdauer selbsttätig wieder absperrt.

Speziell in Verwendung als sanitäre Misch- und Absperrventilvorrichtung vom Selbstschlussventiltyp ergibt sich eine nützliche Anwendung dieser Zusatzfunktionalität für die sogenannte thermische Desinfektion von Sanitärarmaturen, wie sanitären Auslaufarmaturen an Waschtischen, Küchenspülen und Duscheinrichtungen. Bei dieser thermischen Desinfektion ist z.B. für sanitäre Wasserauslaufarmaturen in öffentlichen Einrichtungen ein Durchspülen der Auslaufarmatur mit zugeführtem Warmwasser, vorzugsweise ohne Zumischung von Kaltwasser, für einen ausreichend langen Zeitraum gefordert. Dieser Zeitraum ist typischerweise länger als der Verzögerungszeitraum des Selbstschlussvorgangs gängiger Selbstschlussventile, die daher das Warmwasser für diesen Zweck der thermischen Desinfektion nicht lange genug in der geforderten Menge durchlassen.

Die Ventilbetätigungseinheit weist bei der gattungsgemäßen Selbstschlussventilvorrichtung einen bewegten Betätigungsteil auf, der sich bei der selbsttätigen Bewegung der Ventilbetätigungseinheit von ihrer Öffnungsstellung in ihre Schließstellung relativ zu einem unbewegten Ventilvorrichtungsteil bewegt, und die Blockiereinheit beinhaltet ein nutzerbetätigtes Blockierelement, das in der Blockierstellung der Blockiereinheit als mechanische Bewegungsblockade zwischen dem bewegten Betätigungsteil und dem unbewegten Ventilvorrichtungsteil wirkt. Mit unbewegt ist hierbei lediglich gemeint, dass sich der unbewegte Ventilvorrichtungsteil nicht synchron mit dem bewegten Betätigungsteil mitbewegt, so dass sich die genannte Relativbewegung ergibt, was nicht ausschließt, dass sich der unbewegte Ventilvorrichtungsteil ansonsten in bestimmten Betriebssituationen auch bewegen kann.

Dies stellt eine konstruktiv und funktionell vorteilhafte Realisierung von Ventilbetätigungseinheit und Blockiereinheit dar. Im Normalbetrieb ist die Ventilbetätigungseinheit mittels ihres bewegten Betätigungsteils in der Lage, die Ventilschließkörpereinheit selbsttätig wieder in deren Ventilschließstellung zu verbringen, wenn diese zuvor in ihre Offenstellung verbracht wurde. In der Sonderbetriebsart sorgt der Benutzer durch entsprechende Betätigung der Blockiereinheit für eine mechanische Blockierung der selbsttätigen Schließbewegung der Ventilbetätigungseinheit, die dadurch in ihrer Blockierstellung die Ventilschließkörpereinheit in deren Sonderbetrieb-Ventiloffenstellung hält.

Die Offenlegungsschrift EP 1 293 713 A2 offenbart eine gattungsgemäße Selbstschlussventilvorrichtung, bei der zum Blockieren des Ventils in seiner Offenstellung ein Drucktastenschalter mit einer Drucktaste dient, der mit einem unteren Ende einen Absatz an einem Ventilgehäusekörper hintergreifen kann und dadurch die Rückbewegung der Drucktaste nebst starr mit ihr gekoppelter Ventilsteuerstange blockiert.

Weitere herkömmliche Ventilvorrichtungen vom Selbstschlusstyp und anderen Typs sind in den Offenlegungsschriften JP S53-80018 A und FR 2 713 735 A sowie den Patentschriften CH 315544, US 3.540.481, US 5.046.523 und US 3.840.041 offenbart.

Der Erfindung liegt als technisches Problem die Bereitstellung einer Selbstschlussventilvorrichtung der eingangs genannten Art zugrunde, die in ihrer Funktionalität gegenüber dem oben erläuterten Stand der Technik erweitert ist.

Die Erfindung löst dieses Problem durch die Bereitstellung einer Selbstschlussventilvorrichtung mit den Merkmalen des Anspruchs 1. Vorteilhafte Weiterbildungen der Erfindung sind in den Unteransprüchen angegeben, deren Wortlaut hiermit durch Verweis in die Beschreibung aufgenommen ist.

Gemäß einem ersten Aspekt der Erfindung weist die Selbstschlussventilvorrichtung einen Ventilgehäusekörper auf, der eine Werkzeug-Einführöffnung aufweist, und das Blockierelement einen Blockierstift beinhaltet, der am unbewegten Ventilvorrichtungsteil zwischen einer Blockierstift-Freigabestellung und einer Blockierstift-Blockierstellung verlagerbar gehalten ist und eine der Werkzeug-Einführöffnung zugewandte Werkzeugschnittstelle aufweist. Dies stellt eine konstruktiv einfache und funktionell zuverlässige Realisierung für die mechanische Bewegungsblockade zwischen bewegtem Betätigungsteil und unbewegtem Ventilvorrichtungsteil dar, wobei in diesem Fall der Blockierstift am unbewegten Ventilvorrichtungsteil verbleiben kann und daher vom Benutzer nicht separat bereitgestellt werden braucht. Mittels eines geeigneten Werkzeugs kann der Benutzer den in den unbewegten Ventilvorrichtungsteil integrierten Blockierstift zwischen seiner Freigabestellung und seiner Blockierstellung verlagern, wozu er das Werkzeug in die zugehörige Einführöffnung des Ventilgehäusekörpers einführen und mit der Werkzeugschnittstelle am Blockierstift in Wirkverbindung bringen kann. Die verlagernde Bewegung des Blockierstifts kann z.B. eine Axialbewegung parallel zu einer Längsachse des Blockierstifts oder eine Drehbewegung um die Längsachse des Blockierstifts oder eine kombinierte Axial- und Drehbewegung des Blockierstifts sein. Vorzugsweise behält der Blockierstift seine Freigabestellung und seine Blockierstellung jeweils bei, bis er vom Benutzer in die jeweils andere Stellung verlagert wird.

Gemäß einem zweiten Aspekt der Erfindung weist die Selbstschlussventilvorrichtung einen Ventilgehäusekörper auf, und das Blockierelement beinhaltet einen im Ventilgehäusekörper angeordneten Magnetkörper, der durch einen außerhalb des Ventilgehäusekörpers positionierbaren Betätigungsmagneten zwischen einer Magnetkörper-Freigabestellung und einer Magnetkörper-Blockierstellung zum blockierenden Zusammenwirken des unbewegten Ventilvorrichtungsteils mit dem bewegten Betätigungsteil verlagerbar ist. Dies stellt eine weitere funktionell vorteilhafte und mit relativ geringem Aufwand herstellbare Realisierung für die mechanische Bewegungsblockade zwischen bewegtem Betätigungsteil und unbewegtem Ventilvorrichtungsteil dar. In diesem Fall kann der Benutzer die Betätigung der Blockiereinheit zur Verlagerung zwischen ihrer Freigabestellung und ihrer Blockierstellung magnetisch und damit berührungslos vornehmen, wozu er lediglich den Betätigungsmagneten geeignet außerhalb des Ventilgehäusekörpers positionieren braucht. Durch die vom Betätigungsmagneten ausgeübte Magnetkraft kann der im Ventilgehäusekörper angeordnete Magnetkörper in seine Blockierstellung verlagert werden und dadurch als mechanische Bewegungsblockade zwischen bewegtem Betätigungsteil und unbewegtem Ventilvorrichtungsteil wirken.

In einer Weiterbildung der Erfindung weist die Ventilbetätigungseinheit eine Vorspanneinheit, welche die Ventilschließkörpereinheit von ihrer Ventilschließstellung in ihre Ventiloffenstellung durch einen Fluiddruck und/oder durch ein elastisches Vorspannelement vorspannt, und ein Betätigungsglied auf, das zwischen einer öffnungsseitigen Endlage und einer schließseitigen Endlage beweglich ist und unidirektional mit der Ventilschließkörpereinheit in Richtung zu deren Ventilschließstellung hin bewegungsgekoppelt ist. Das Betätigungsglied bringt durch seine Bewegung in seine schließseitige Endlage die Ventilschließkörpereinheit aktiv in deren Ventilschließstellung, während die Kraft für das Herausbewegen der Ventilschließkörpereinheit aus ihrer Ventilschließstellung nicht vom Betätigungsglied übertragen wird, sondern von der Vorspanneinheit bereitgestellt wird, wobei das Betätigungsglied dieses Herausbewegen der Ventilschließkörpereinheit aus ihrer Ventilschließstellung freigibt, indem es seine öffnungsseitige Endlage einnimmt. Das Betätigungsglied ist in entsprechenden Ausführungen Bestandteil des bewegten Betätigungsteils der Ventilbetätigungseinheit.

Optional kann ein Leerhub für das Betätigungsglied von seiner öffnungsseitigen Endlage bis zu einer davon beabstandeten Zwischenlage vorgesehen sein. Die unidirektionale Kopplung liegt dann nur längs eines Kopplungshubs des Betätigungsglieds von der Zwischenlage zu der schließseitigen Endlage als einer Kopplungsschließlage des Betätigungsglieds vor. Dadurch lässt sich auf Wunsch vorteilhaft die Zeitverzögerung für die selbsttätige Selbstschlussfunktion der Ventilvorrichtung größer wählen als eine Zeitdauer, welche die Ventilschließkörpereinheit benötigt, um von ihrer temporären Offenstellung in ihre stationäre Schließstellung zu gelangen. Denn in diesem Fall legt das Betätigungsglied zunächst den Leerhub zurück, bevor es dann im weiteren Bewegungsablauf die Ventilschließkörpereinheit mitnimmt. In alternativen Ausführungen arbeitet die Ventilvorrichtung ohne einen solchen Leerhub, wodurch dann die Ventilschließkörpereinheit unverzögert dem Betätigungsglied folgt.

In alternativen Ausführungen ist das Betätigungsglied bzw. der bewegte Betätigungsteil bidirektional mit der Ventilschließkörpereinheit sowohl in Richtung zu deren Ventilschließstellung hin als auch in Richtung aus deren Ventilschließstellung heraus bewegungsgekoppelt.

In einer Ausgestaltung der Erfindung beinhaltet die Ventilbetätigungseinheit eine Hydraulikdämpfereinheit, die einen nutzerbetätigt axialbeweglich angeordneten Hydraulikzylinder mit einem Kolbenraum, einen im Kolbenraum beweglich zwischen einer stationären Kolbenendlage und einer instationären Kolbenendlage angeordneten Verdrängerkolben, der den Kolbenraum in zwei Halbräume unterteilt, eine bei Bewegung des Verdrängerkolbens in Richtung seiner instationären Kolbenendlage öffnende und bei Bewegung des Verdrängerkolbens in Richtung seiner stationären Kolbenendlage schließende Hydraulikfluid-Durchlassverbindung zwischen den beiden Halbräumen und eine mindestens bei Bewegung des Verdrängerkolbens in Richtung seiner stationären Kolbenendlage offene Hydraulikfluid-Drosselverbindung zwischen den beiden Halbräumen umfasst. Außerdem beinhaltet die Ventilbetätigungseinheit in diesem Fall eine mit dem Verdrängerkolben bewegungsgekoppelte, auf die Ventilschließkörpereinheit wirkende Kolbenstange. Dies stellt eine konstruktiv und funktionell vorteilhafte Realisierung der Ventilbetätigungseinheit dar. Derartige hydraulische Realisierungen dieses Teils der Ventilbetätigungseinheit sind beispielsweise aus dem oben erwähnten Stand der Technik an sich bekannt, worauf für entsprechende Details verwiesen werden kann, siehe insbesondere auch die oben erwähnte ältere Patentanmeldung DE 10 2018 204 147.4 der Anmelderin. In alternativen Ausführungen kann die Ventilbetätigungseinheit statt einer solchen hydraulischen Ausführung nicht-hydraulisch ausgeführt sein, z.B. in einer der aus dem Stand der Technik von Selbstschlussventilvorrichtungen an sich bekannten Art, was den Normalbetrieb-Komponententeil der Ventilbetätigungseinheit betrifft.

In einer Weiterbildung der Erfindung umfasst die Ventilschließkörpereinheit einen Membranventilkörper mit magnetbetätigter Pilotventilvorsteuerung, wobei ein zugehöriger Magnet von einer Magnethalterung gehalten ist, die zu dem bewegten Betätigungsteil gehört. Auf diese Weise lässt sich die Selbstschlussventilvorrichtung durch einen an sich bekannten Membranventiltyp mit magnetbetätigter Vorsteuerung in Kombination mit der Selbstschlussfunktion bereitstellen. Derartige Realisierungen dieses Teils der Ventilbetätigungseinheit sind beispielsweise aus dem oben erwähnten Stand der Technik an sich bekannt, worauf für entsprechende Details verwiesen werden kann, siehe insbesondere auch die oben erwähnte ältere Patentanmeldung DE 10 2018 204 147.4 der Anmelderin. In alternativen Ausführungen ist die Ventilschließkörpereinheit anderweitig realisiert, z.B. in an sich herkömmlichen Ausführungen ohne Pilotventilvorsteuerung.

In einer Weiterbildung der Erfindung beinhaltet die Selbstschlussventilvorrichtung eine Fluidmischeinheit, die zur Bildung eines Mischfluids durch Mischung zweier getrennt zugeführter Fluide in einem einstellbaren Mischungsverhältnis und zur Abgabe des Mischfluids eingerichtet ist, und die Ventilbetätigungseinheit umfasst eine nutzerbetätigte Mischbedieneinheit zur Einstellung des Mischungsverhältnisses. In dieser vorteilhaften Realisierung fungiert die Selbstschlussventilvorrichtung nicht nur als reines Absperrventil, sondern zusätzlich als Mischventil, d.h. sie bildet eine Misch- und Absperrventilvorrichtung vom Selbstschlussventiltyp. In alternativen Ausführungen ist die Selbstschlussventilvorrichtung als reine Absperrventilvorrichtung vom Selbstschlussventiltyp ausgeführt.

In entsprechenden Ausführungen kann vorgesehen sein, dass die Blockiereinheit nur dann von ihrer Freigabestellung in ihre Blockierstellung verlagert werden kann, wenn sich die Fluidmischeinheit in einer bestimmten Mischstellung befindet, z.B. in einer Stellung, in der sie nur eines der beiden Fluide weiterleitet. Dies kann z.B. für die erwähnte thermische Desinfektion im Fall einer sanitären Wasserauslaufarmatur dahingehend genutzt werden, dass die Blockiereinheit nur dann in ihre Blockierstellung verlagert werden kann, wenn sich die Fluidmischeinheit in ihrer Warmwasserstellung befindet, in der sie die Warmwasserzufuhr offen hält und die Kaltwasserzufuhr absperrt.

In einer Ausgestaltung der Erfindung beinhaltet die Fluidmischeinheit einen drehbeweglichen Ventilmischkörper, und die Mischbedieneinheit beinhaltet ein drehbewegliches Bedienelement, das drehfest mit dem drehbeweglichen Ventilmischkörper gekoppelt ist. Dies stellt eine vorteilhafte Realisierung für die Fluidmischeinheit und die Mischbedieneinheit dar. Der Benutzer kann das Mischungsverhältnis der zugeführten Fluide über eine Drehbewegung am drehbeweglichen Bedienelement einstellen, während er die Absperrfunktion z.B. durch eine axiale Bedienbewegung aktivieren kann.

Vorteilhafte Ausführungsformen der Erfindung und eine deren besserem Verständnis dienende, nicht erfindungsgemäße Ausführung sind in den Zeichnungen dargestellt.

Diese und weitere vorteilhafte Ausführungsformen der Erfindung werden nachfolgend näher beschrieben. Hierbei zeigen:
- Fig. 1: eine Blockdiagrammdarstellung einer Selbstschlussvorrichtung in Ventilschließstellung mit einer Blockiereinheit in Freigabestellung,
- Fig. 2: die Ansicht von Fig. 1 mit der Selbstschlussventilvorrichtung in temporärer Normalbetrieb-Ventiloffenstellung,
- Fig. 3: die Ansicht von Fig. 1 mit der Blockiereinheit in Blockierstellung und folglich der Selbstschlussventilvorrichtung in stationärer Sonderbetrieb-Ventiloffenstellung,
- Fig. 4: eine Blockdiagrammdarstellung entsprechend Fig. 1 mit der Selbstschlussventilvorrichtung in einer detaillierteren Realisierung,
- Fig. 5: die Ansicht von Fig. 4 mit der Selbstschlussventilvorrichtung in der temporären Normalbetrieb-Ventiloffenstellung entsprechend Fig. 2,
- Fig. 6: die Ansicht von Fig. 4 mit der Selbstschlussventilvorrichtung in der stationären Sonderbetrieb-Ventiloffenstellung entsprechend Fig. 3,
- Fig. 7: eine Längsschnittansicht einer als Misch- und Absperrventilvorrichtung ausgelegten, nicht erfindungsgemäßen Selbstschlussventilvorrichtung nach Art der Fig. 4 bis 6 in Ventilschließstellung mit Blockierstab-Blockiereinheit,
- Fig. 8: die Ansicht eines oberen Teils von Fig. 7 in einer Endstellung eines Mischventilteils der Selbstschlussventilvorrichtung,
- Fig. 9: eine Perspektivansicht der Selbstschlussventilvorrichtung in der Stellung von Fig. 8 bei abgenommenem Bedienteil,
- Fig. 10: die Ansicht von Fig. 8 mit der Selbstschlussventilvorrichtung in Ventiloffenstellung,
- Fig. 11: eine Seitenansicht eines Blockierstabs für die Blockiereinheit,
- Fig. 12: die Ansicht von Fig. 10 mit dem Blockierstab von Fig. 11 in Blockierstellung,
- Fig. 13: die Ansicht von Fig. 12 mit der Selbstschlussventilvorrichtung in Ventilschließstellung nach Entfernen des Blockierstabs,
- Fig. 14: die Ansicht von Fig. 7 für eine Variante der Blockiereinheit mit werkzeugbetätigtem Blockierstift in Freigabestellung der Blockiereinheit,
- Fig. 15: eine perspektivische Explosionsansicht wesentlicher Teile der Blockiereinheit von Fig. 14,
- Fig. 16: die Ansicht von Fig. 14 mit einem Mischventilteil der Selbstschlussventilvorrichtung in einer Endstellung entsprechend Fig. 8,
- Fig. 17: die Ansicht von Fig. 16 mit der Selbstschlussventilvorrichtung in Ventiloffenstellung,
- Fig. 18: die Ansicht von Fig. 17 mit der Blockiereinheit in Blockierstellung,
- Fig. 19: eine Längsschnittansicht der Teile der Blockiereinheit von Fig. 15 in Freigabestellung,
- Fig. 20: die Ansicht von Fig. 19 mit der Blockiereinheit in Blockierstellung,
- Fig. 21: eine Schnittansicht längs einer Linie XXI-XXI von Fig. 20,
- Fig. 22: eine Längsschnittansicht eines Mischventilteils einer weiteren Variante der Selbstschlussventilvorrichtung in einer temporären Öffnungsstellung im Normalbetrieb mit einer Magnetkörper-Blockiereinheit in Freigabestellung,
- Fig. 23: eine ausschnittweise Ansicht von Fig. 22 mit der Selbstschlussventilvorrichtung in Vorbereitung zur Umstellung von der Ventilschließstellung in die Ventiloffenstellung,
- Fig. 24: die Ansicht von Fig. 23 mit der Selbstschlussventilvorrichtung in Ventiloffenstellung,
- Fig. 25: die Ansicht von Fig. 24 mit magnetisch von der Freigabestellung in Richtung Blockierstellung bewegtem Magnetkörper,
- Fig. 26: die Ansicht von Fig. 25 mit in der Blockierstellung verrastetem Magnetkörper,
- Fig. 27: die Ansicht von Fig. 26 mit ausgerastet in Richtung Freigabestellung bewegtem Magnetkörper und
- Fig. 28: die Ansicht von Fig. 27 mit in die Freigabestellung zurückbewegtem Magnetkörper.

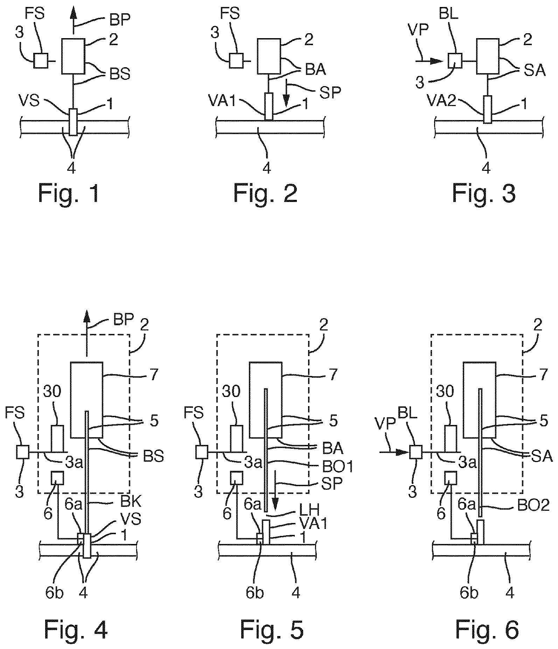

Die in den Fig. 1 bis 3 blockdiagrammatisch gezeigte Selbstschlussventilvorrichtung beinhaltet eine Ventilschließkörpereinheit 1, eine Ventilbetätigungseinheit 2 und eine nutzerbetätigte Blockiereinheit 3. Die Ventilschließkörpereinheit 1 greift in einen Fluidströmungsweg 4 ein und ist zwischen einer in Fig. 1 gezeigten Ventilschließstellung VS und einer in Fig. 2 gezeigten Ventiloffenstellung VA1 beweglich angeordnet. In der Ventilschließstellung VS schließt sie den Fluidströmungsweg 4, d.h. sperrt ihn ab, so dass kein Fluid den Fluidströmungsweg 4 passieren kann. In einem normalen Betrieb der Ventilvorrichtung befindet sich die Ventilschließkörpereinheit 1 temporär in der Ventiloffenstellung VA1 und hält den Fluidströmungsweg 4 offen, so dass Fluid im Fluidströmungsweg 4 passieren kann, wobei es sich je nach Bedarf und Anwendungsfall bei der Ventiloffenstellung VA1 um eine Volloffenstellung oder um eine Teiloffenstellung handeln kann. In der Volloffenstellung gibt die Ventilschließkörpereinheit 1 den Durchlassquerschnitt des Fluidströmungswegs 4 vollständig, d.h. maximal, frei, in der Teiloffenstellung gibt sie ihn nur teilweise frei, d.h. die Teiloffenstellung umfasst eine beliebige teilgeöffnete Stellung, in der die Ventilschließkörpereinheit 1 den Durchlassquerschnitt des Fluidströmungswegs 4 mit einem beliebigen Durchlassquerschnittswert größer als null und kleiner als der Maximalwert bei Volloffenstellung freigibt.

Die Ventilbetätigungseinheit 2 hält in einer stationären Schließstellung BS, wie in Fig. 1 gezeigt, die Ventilschließkörpereinheit 1 in deren Ventilschließstellung VS, während sie in einer temporären Öffnungsstellung BA, wie in Fig. 2 gezeigt, die Ventilschließkörpereinheit 1 in der Normalbetrieb-Ventiloffenstellung VA1 hält. Die Ventilbetätigungseinheit 2 gelangt nutzerbetätigt von ihrer stationären Schließstellung BS in ihre temporäre Öffnungsstellung BA, wie in Fig. 1 durch einen Betätigungspfeil BP symbolisiert. Von ihrer temporären Öffnungsstellung BA gelangt die Ventilbetätigungseinheit 2 selbsttätig in ihre stationäre Schließstellung BS, wie in Fig. 2 durch einen Selbstschlusspfeil SP symbolisiert. Die Bewegung der Ventilschließkörpereinheit 1 zwischen ihrer Schließstellung VS und ihrer Offenstellung VA1 kann beispielsweise eine lineare, translatorische Bewegung oder eine Drehbewegung eines Ventilschließkörperelements relativ zu einem korrespondierenden Ventilsitz beinhalten, wie dies herkömmlich ist und daher hier keiner näheren Erläuterungen bedarf.

Die Blockiereinheit 3 ist nutzerbetätigt zwischen einer Freigabestellung FS, in der sie die selbsttätige Bewegung der Ventilbetätigungseinheit 2 von deren Öffnungsstellung BA in deren Schließstellung BS freigibt, und einer Blockierstellung BL verlagerbar, in der sie die selbsttätige Bewegung der Ventilbetätigungseinheit 2 von deren Öffnungsstellung BA in deren Schließstellung BS blockiert. Im blockierten Zustand befindet sich die Ventilbetätigungseinheit 2 in einer Festhaltestellung SA, in der sie in einer Sonderbetriebsart der Selbstschlussventilvorrichtung die Ventilschließkörpereinheit 1 in einer Sonderbetrieb-Ventiloffenstellung VA2 hält, wie in Fig. 3 gezeigt.

Bei der Sonderbetrieb-Ventiloffenstellung VA2 kann es sich je nach Bedarf und Anwendungsfall um die gleiche Ventiloffenstellung wie im Normalbetrieb oder um eine davon verschiedene Ventiloffenstellung handeln, z.B. in beiden Fällen um die Volloffenstellung oder nur im einen Fall um die Volloffenstellung und im anderen Fall um eine Teiloffenstellung oder in beiden Fällen um identische oder voneinander verschiedene Teiloffenstellungen mit vorgebbarem Öffnungsgrad größer als null und kleiner als der maximale Öffnungswert bei der Volloffenstellung. Die Blockiereinheit 3 gelangt durch Nutzerbetätigung in die Blockierstellung BL, wie in Fig. 3 durch einen Verstellbetätigungspfeil VP symbolisiert. Allgemein verbleibt die Blockiereinheit 3 jeweils in ihrer Freigabestellung FS bzw. Blockierstellung BL, bis sie vom Benutzer in ihre jeweils andere Stellung verlagert wird. Somit verbleibt in dieser Sonderbetriebsart die Ventilschließkörpereinheit 1 in dieser Offenstellung VA2, bis der Benutzer durch entsprechende Verlagerung der Blockiereinheit 3 in ihre Freigabestellung FS die Ventilbetätigungseinheit 2 wieder aus ihrer Festhaltestellung SA herausbringt, d.h. wieder auf Normalbetrieb umstellt.

In einer vorteilhaften Ausführung, wie sie in den Fig. 4 bis 6 gezeigt ist, weist die Ventilbetätigungseinheit 2 der Selbstschlussventilvorrichtung einen bewegten Betätigungsteil 5 auf, der sich bei der selbsttätigen Bewegung der Ventilbetätigungseinheit 2 von ihrer Öffnungsstellung BA in ihre Schließstellung BS relativ zu einem unbewegten Ventilvorrichtungsteil 30 bewegt, und die Blockiereinheit beinhaltet ein nutzerbetätigtes Blockierelement 3a, das in der Blockierstellung BL der Blockiereinheit 3 als mechanische Bewegungsblockade zwischen dem bewegten Betätigungsteil 5 und dem unbewegten Ventilvorrichtungsteil 30 wirkt.

Der Benutzer kann folglich das Ventil im Normalbetrieb dadurch öffnen, dass er die Ventilbetätigungseinheit 2 aus ihrer stationären Schließstellung BS heraus in ihre temporäre Öffnungsstellung BA verbringt, wodurch der bewegte Betätigungsteil 5 temporär aus einer Schließlage BK heraus in eine erste Öffnungslage B01 gelangt und sich die Ventilschließkörpereinheit 1 aus ihrer Schließstellung VS heraus in ihre Offenstellung VA1 bewegt. Dies öffnet temporär den Fluidströmungsweg 4. Anschließend gelangt gemäß der Selbstschlussfunktionalität im Normalbetrieb die Ventilschließkörpereinheit 1 nach einer gewünschten, vorgebbaren Zeitdauer selbsttätig wieder in ihre Schließstellung VS zurück, was dadurch bewirkt wird, dass die Ventilbetätigungseinheit 2 selbsttätig aus ihrer temporären Öffnungsstellung BA heraus in ihre stationäre Schließstellung BS gelangt und folglich das Betätigungsglied 5a aus seiner ersten Öffnungslage BO1 heraus in seine Schließlage BK gelangt. Die Blockiereinheit befindet sich hierbei in ihrer Freigabestellung FS.

Zur Einstellung der Sonderbetriebsart der Selbstschlussventilvorrichtung verlagert der Benutzer die Blockiereinheit 3 in ihre Blockierstellung BL, die dann die Ventilbetätigungseinheit 2 in deren Festhaltestellung SA hält, wodurch die Ventilbetätigungseinheit 2 den bewegten Betätigungsteil 5 in einer zweiten Öffnungslage BO2 hält, wie in Fig. 6 gezeigt. Dadurch gelangt die Ventilschließkörpereinheit 1 in ihre Sonderbetrieb-Ventiloffenstellung VA2, in der das Ventil bleibend geöffnet ist. Durch Rückverlagern der Blockiereinheit 3 in ihre Freigabestellung FS kann der Benutzer die Ventilbetätigungseinheit 2 wieder auf Normalbetrieb umstellen, d.h. den stationären Schließstellungszustand des Ventils wieder herstellen.

In einer vorteilhaften Ausführung, wie ebenfalls in den Fig. 4 bis 6 gezeigt, weist die Ventilbetätigungseinheit 2 eine Vorspanneinheit 6, welche die Ventilschließkörpereinheit 1 von ihrer Ventilschließstellung VS in ihre Ventiloffenstellung VA1 durch einen Fluiddruck 6a und/oder durch ein elastisches Vorspannelement 6b vorspannt, und ein Betätigungsglied 5a auf, das zwischen einer öffnungsseitigen Endlage und einer schließseitigen Endlage beweglich ist und unidirektional mit der Ventilschließkörpereinheit 1 in Richtung zu deren Ventilschließstellung VS hin bewegungsgekoppelt ist. Das Betätigungsglied 5a ist vorzugsweise Bestandteil des bewegten Betätigungsteils 5 und wenigstens längs eines die Schließlage BK als schließseitiger Endlage aufweisenden Kopplungshubs KH unidirektional mit der Ventilschließkörpereinheit 1 gekoppelt. Somit bringt in dieser Systemrealisierung im Normalbetrieb die Ventilbetätigungseinheit 2 mittels ihres sich längs seines Kopplungshubs KH bewegenden Betätigungsglieds 5 die Ventilschließkörpereinheit 1 selbsttätig in deren Schließstellung VS zurück, während zum nutzerinitiierten Öffnen des Ventils das Betätigungsglied 5a die Bewegung der Ventilschließkörpereinheit 1 aus ihrer Schließstellung VS in ihre temporäre Offenstellung VA1 freigibt und die Öffnungsbewegung der Ventilschließkörpereinheit 1 durch die Vorspanneinheit 6 bewirkt wird.

In der Ausführung der Selbstschlussventilvorrichtung gemäß den Fig. 4 bis 6 weist die Ventilbetätigungseinheit 2 eine Betätigungsglied-Führungsvorrichtung 7 auf, an der das Betätigungsglied 5a beweglich derart geführt ist, dass für dieses die erwähnten Bewegungsabläufe ermöglicht sind. Beispielsweise kann es sich bei dem Betätigungsglied 5a um eine Betätigungsstange bzw. Kolbenstange oder dergleichen handeln, die entlang ihrer Längsrichtung translationsbeweglich an der Betätigungsglied-Führungsvorrichtung 7 geführt ist. Alternativ kann das Betätigungsglied 5a ein drehbeweglich geführtes Element sein.

In entsprechenden Ausführungen weist der bewegte Betätigungsteil 5 bzw. das Betätigungsglied 5a, wie in den Fig. 4 bis 6 gezeigt, einen Leerhub LH von seiner öffnungsseitigen Endlage bis zu einer davon beabstandeten Zwischenlage auf. Die unidirektionale Kopplung liegt dann nur längs eines Kopplungshubs von der Zwischenlage zu der schließseitigen Endlage vor. Dadurch lässt sich auf Wunsch vorteilhaft die Zeitverzögerung für die selbsttätige Selbstschlussfunktion der Ventilvorrichtung größer wählen als eine Zeitdauer, welche die Ventilschließkörpereinheit benötigt, um von ihrer temporären Offenstellung in ihre stationäre Schließstellung zu gelangen. Denn in diesem Fall legt der bewegte Betätigungsteil 5 bzw. das Betätigungsglied während des Selbstschlussvorgangs des Ventils zunächst den Leerhub LH zurück, bevor er bzw. es dann im weiteren Bewegungsablauf in Wirkverbindung mit der Ventilschließkörpereinheit 1 tritt und diese von ihrer Ventiloffenstellung VA1 in ihre Ventilschließstellung VS mitnimmt. In alternativen Ausführungen arbeitet die Ventilvorrichtung ohne einen solchen Leerhub LH, wodurch dann die Ventilschließkörpereinheit 1 unverzögert dem bewegten Betätigungsteil 5 bzw. Betätigungsglied 5a folgt.

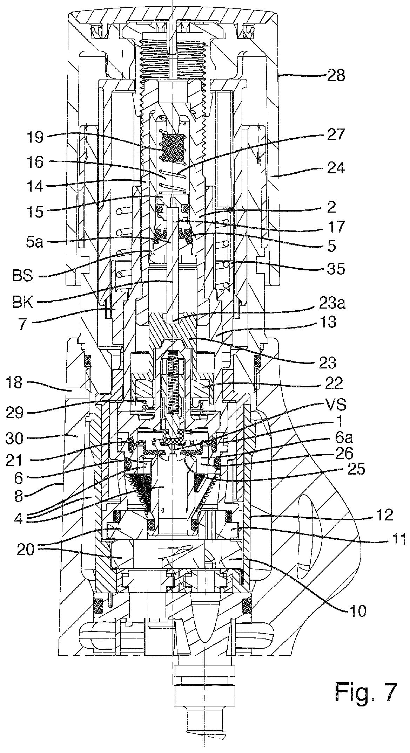

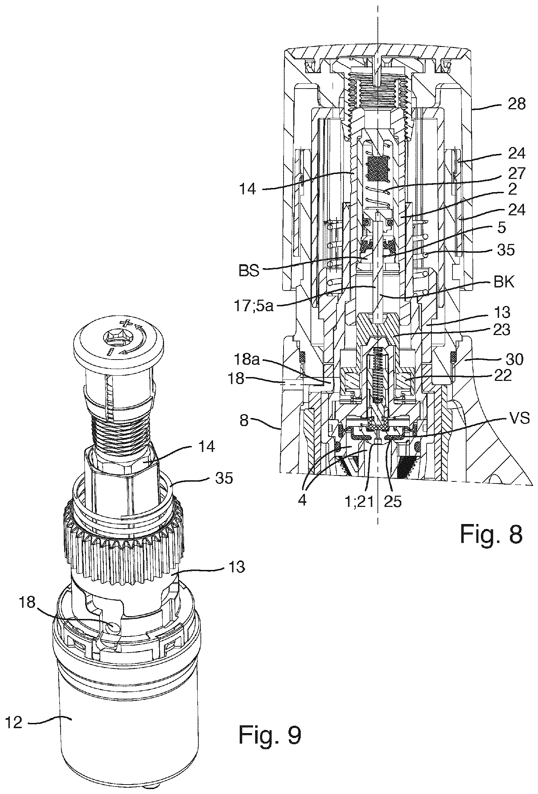

In entsprechenden Ausführungen ist die Selbstschlussventilvorrichtung nach Art der Fig. 4 bis 6 wie in den Ausführungen der Fig. 7 bis 28 als Misch- und Absperrventilvorrichtung ausgelegt, z.B. integriert in eine sanitäre Auslaufarmatur, genauer in ein Armaturengehäuse der sanitären Auslaufarmatur. In den gezeigten Ausführungen umfasst die Selbstschlussventilvorrichtung einen Ventilgehäusekörper 8, der z.B. von einem in Gebrauchslage etwa vertikal verlaufenden, zylindrischen Grundkörper des Armaturengehäuse einer sanitären Auslaufarmatur gebildet sein kann, wobei die Selbstschlussventilvorrichtung selbst beispielsweise in einer Kartuschenbauform ausgeführt sein kann, wie aus Fig. 9 ersichtlich.

In diesen gezeigten Ausführungen beinhaltet die Selbstschlussventilvorrichtung eine Fluidmischeinheit 20, die zur Bildung eines Mischfluids durch Mischung zweier getrennt zugeführter Fluide in einem einstellbaren Mischungsverhältnis und zur Abgabe des Mischfluids eingerichtet ist, wobei die Ventilbetätigungseinheit 2 eine nutzerbetätigte Mischbedieneinheit 24 zur Einstellung des Mischungsverhältnisses durch entsprechende Steuerung der Fluidmischeinheit 20 umfasst. In der Anwendung für Sanitärarmaturen können die beiden Fluide insbesondere Kaltwasser und Warmwasser sein. Im gezeigten Beispiel der Fig. 7 bis 28 beinhaltet die Fluidmischeinheit 20 in an sich bekannter und daher hier nicht näher zu erläuternder Bauweise eine an einem Ventil- bzw. Kartuschengehäuse 12 feststehende Ventilscheibe 10 und einen drehbeweglichen Ventilmischkörper 11 in Form einer gegen die feststehende Ventilscheibe 10 drehbeweglich anliegenden Ventilscheibe. Die Mischbedieneinheit 24 beinhaltet im gezeigten Beispiel ein drehbewegliches Bedienelement 28, das drehfest mit dem drehbeweglichen Ventilmischkörper 11 gekoppelt ist, im gezeigten Beispiel über eine Drehbetätigungshülse 13, auf die das Bedienelement 28 als ein Drehknopf drehfest aufgesetzt ist.

Die Funktionsweise eines solchen Mischventilteils der Selbstschlussventilvorrichtung ist an sich bekannt und bedarf daher hier keiner näheren Erläuterung, es sei hierfür z.B. auf die Patentschrift DE 10 2018 206 354 B3 und eine von der Anmelderin unter der Artikelnummer 92529000 vertriebene Mischervorrichtung verwiesen.

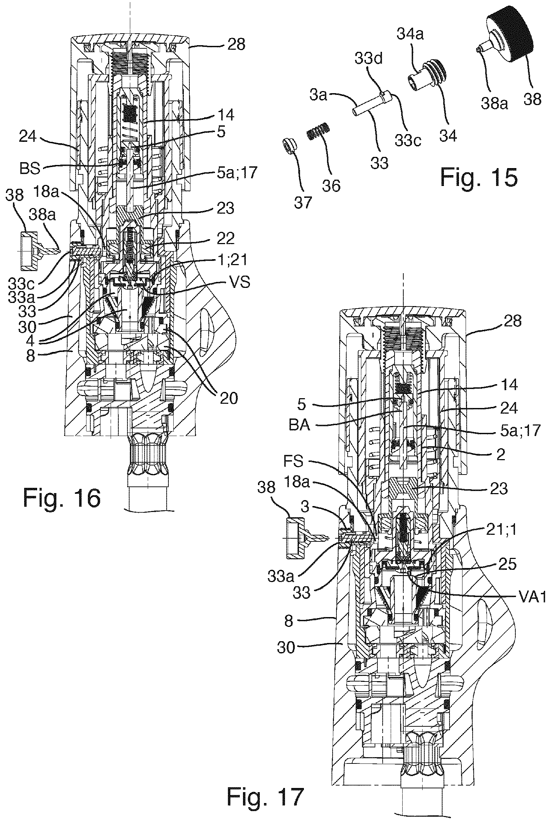

Zusätzlich weist die Selbstschlussventilvorrichtung in entsprechenden Ausführungen, wie in denjenigen der Fig. 7 bis 28, einen Absperrventilteil mit einer Hydraulikdämpfereinheit in Form einer translatorischen Kolben/Zylinder-Einheit nach Art eines herkömmlichen Lineardämpfers als Bestandteil der Ventilbetätigungseinheit 2 auf. Die Hydraulikdämpfereinheit beinhaltet einen axialbeweglich koaxial in der Drehbetätigungshülse 13 geführten Hydraulikzylinder 14 und einen in einem Kolbenraum 16 des Hydraulikzylinders 14 axialbeweglich geführten Verdrängerkolben 15, mit dem eine Kolbenstange 17 als das Betätigungsglied 5a bzw. als Bestandteil des bewegten Betätigungsteils 5 starr bewegungsgekoppelt ist. Der Verdrängerkolben 15 unterteilt den Kolbenraum 16 in zwei Halbräume und ist zwischen einer z.B. in Fig. 7 gezeigten, stationären Kolbenendlage, mit der die Kopplungsschließlage BK des bewegten Betätigungsteils 5 bzw. Betätigungsglieds 5a korrespondieren, und einer z.B. in Fig. 17 gezeigten, instationären Kolbenendlage beweglich angeordnet, mit der im Normalbetrieb die erste Öffnungslage BO1 des Betätigungsglieds 5a korrespondiert. Eine Vorspannfeder 27 spannt den Verdrängerkolben 15 in Richtung seiner stationären Kolbenendlage vor, die einer am weitesten aus dem Hydraulikzylinder 14 ausgefahrenen Stellung des bewegten Betätigungsteils 5 bzw. des Betätigungsglieds 5 entspricht. Die Hydraulikdämpfereinheit bildet somit in dieser Realisierung die Betätigungsglied-Führungsvorrichtung 7, und der bewegte Betätigungsteil 5 umfasst den Hydraulikzylinder 14, den Verdrängerkolben 15 und das Betätigungsglied 5a.

Des Weiteren beinhaltet die Hydraulikdämpfereinheit eine bei Bewegung des Verdrängerkolbens 15 in Richtung seiner instationären Kolbenendlage öffnende und bei Bewegung des Verdrängerkolbens 15 in Richtung seiner stationären Kolbenendlage schließende Hydraulikfluid-Durchlassverbindung zwischen den beiden Kolbenhalbräumen sowie eine mindestens bei Bewegung des Verdrängerkolbens 15 in Richtung seiner stationären Kolbenendlage offene Hydraulikfluid-Drosselverbindung zwischen den beiden Halbräumen. Optional ist im Kolbenraum 16 ein kompressibles Volumenausgleichselement 19 angeordnet, wie gezeigt. Dies kann z.B. ein Schwammkörper oder ein gasgefüllter Ballonkörper sein.

In einer entsprechenden Ausführung beinhaltet die Ventilschließkörpereinheit 1, wie in den Ausführungsbeispielen der Fig. 7 bis 28, einen Membranventilkörper 21 mit magnetbetätigter Pilotventilvorsteuerung, wobei ein zugehöriger Magnet 22 von einer Magnethalterung 23 gehalten ist, die eine Anschlagfläche 23a für das Betätigungsglied 5a aufweist. In dieser Ausführung ist das Betätigungsglied 5a unidirektional mit der Ventilschließkörpereinheit 1 in Richtung zu deren Schließstellung hin bewegungsgekoppelt, und die Ventilbetätigungseinheit 2 weist die Vorspanneinheit 6 auf, die den Membranventilkörper 21 von seiner gegen einen korrespondierenden Ventilsitz 25 anliegenden Schließlage in Richtung seiner Offenstellung vorspannt. Im gezeigten Beispiel beinhaltet die Vorspanneinheit 6 einen im Fluidströmungsweg 4 stromaufwärts des Membranventilkörpers 21 in einem zugehörigen Ventilraum 26 anstehenden und den Membranventilkörper 21 in dessen Offenstellung drückenden Fluiddruck 6a. Optional umfasst die Vorspanneinheit 6 alternativ oder zusätzlich ein nicht gezeigtes, elastisches Vorspannelement, das den Membranventilkörper 21 in Richtung seiner Offenstellung drückt oder zieht, z.B. eine entsprechende Vorspannfeder.

Die Funktionsweise der in den Fig. 7 bis 28 gezeigten Selbstschlussventilvorrichtung entspricht im Normalbetrieb derjenigen, wie und soweit sie oben zu den Fig. 4 bis 6 erläutert ist, und entspricht im Übrigen derjenigen, wie sie für den erwähnten Aufbau des Absperrventilteils insbesondere hinsichtlich der Selbstschlussfunktion an sich bekannt ist und daher hier keiner detaillierten Erläuterung bedarf. Es kann beispielsweise auf die diesbezüglichen Erläuterungen in der oben erwähnten älteren Patentanmeldung DE 10 2018 204 147.4 der Anmelderin verwiesen werden.

Der geschlossene Zustand z.B. gemäß Fig. 7 bildet einen Ausgangszustand der Selbstschlussventilvorrichtung. Die Hydraulikdämpereinheit drückt das Betätigungsglied 5a gegen die Magnethalterung 23 an, und die Pilotventilanordnung hält dadurch den Membranventilkörper 21 in seiner Schließstellung. Zum Öffnen des Ventils drückt der Benutzer den Hydraulikzylinder 14 nach vorn, d.h. in den Fig. 7 nach unten, wozu er axial auf das Bedienelement 28 drückt, das axial bewegungsstarr an den Hydraulikzylinder 14 angekoppelt und gegenüber diesem drehbeweglich gehalten ist. Das Bedienelement 28 fungiert in diesem Fall somit als ein einziges Bedienelement zur Steuerung sowohl der Fluidmischfunktion als auch der Absperrfunktion des Ventils. Dadurch gelangt der Verdrängerkolben 15 weiter in den Hydraulikzylinder 14 hinein in seine andere, instationäre Kolbenendlage. Sobald der Benutzer das Bedienelement 28 loslässt, drückt eine Rückstellfeder 35 das Bedienelement 28 axial zurück, und die Vorspannfeder 29 drückt den Magneten 22 samt Magnethalterung 23 und damit das Betätigungsglied 5a samt Hydraulikzylinder 14 zurück, d.h. in Fig. 7 nach oben, wodurch die Pilotventilanordnung öffnet und den Membranventilkörper 21 in Öffnungsrichtung freigibt, der sich dadurch mittels des Fluiddrucks 6a und/oder der zugehörigen Vorspannfeder in seine Offenstellung bewegt. Der Verdrängerkolben 15 beginnt sich unter der Wirkung der Vorspannfeder 27 wieder nach vorn zu bewegen, d.h. in Fig. 7 nach unten, verlangsamt durch die Drosselverbindung und optional zeitverzögert durch den Leerhub LH, falls vorgesehen. Dadurch gelangt der Membranventilkörper 21, d.h. die Ventilschließkörpereinheit 1, selbsttätig mit vorgebbarer Zeitverzögerung aus ihrer folglich temporären Offenstellung VA1 im Normalbetrieb wieder in ihre stationäre Schließstellung VS.

In einer nicht erfindungsgemäßen Ausführung der Selbstschlussventilvorrichtung und speziell der Blockiereinheit 3, wie sie in den Fig. 7 bis 13 gezeigt ist, umfasst der Ventilgehäusekörper 8 eine Blockierstab-Einführöffnung 18, wobei das Blockierelement 3a einen Blockierstab 31 beinhaltet, der zum blockierenden Zusammenwirken des unbewegten Ventilvorrichtungsteils 30 mit dem bewegten Betätigungsteil 5 in die Blockierstab-Einführöffnung 18 einführbar ist. In dieser Ausführung ergibt sich folgende Funktionsweise der Ventilvorrichtung bezüglich der Sonderbetriebsart mit Aktivierung der Blockiereinheit 3.

In der Ventilschließstellung BS, wie sie in Fig. 7 gezeigt ist, verbringt der Benutzer zunächst die Fluidmischeinheit 20 durch entsprechendes Betätigen der Mischbedieneinheit 24, hier durch Drehen des Bedienelements 28, in eine ihrer beiden Endlagen, z.B. einer Warmwasser-Endlage im Fall von Kaltwasser und Warmwasser als zu mischende Fluide. Fig. 8 zeigt die Ventilvorrichtung in dieser Situation. Die Fluidmischeinheit 20 bzw. die zugeordnete Mischbedieneinheit 24 sind in diesem Ausführungsbeispiel so ausgelegt, dass nur in dieser Endlage ein Durchlass 18a mit der Blockierstift-Einführöffnung 18 fluchtet, um ein Einführen bzw. Durchstecken des Blockierstabs 31 bis zum bewegten Betätigungsteil 5 der Ventilbetätigungseinheit 2 zu ermöglichen bzw. freizugeben, während in anderen Stellungen der Fluidmischeinheit 20 bzw. der Mischbedieneinheit 24 die Einführöffnung 18 blockiert wird, z.B. von der Drehübertragungshülse 13, die dann den Durchlass 18a abdeckt.

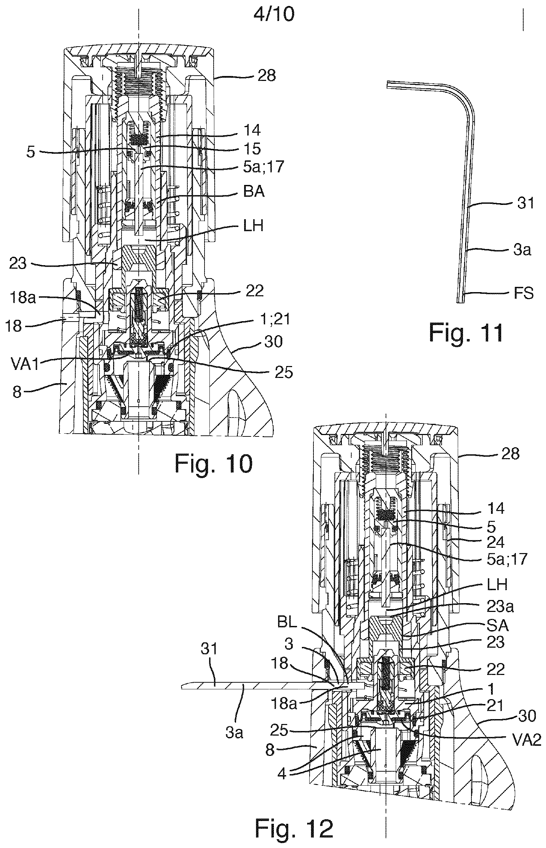

Anschließend verbringt der Benutzer die Ventilbetätigungseinheit 2 von ihrer Schließstellung BS in ihre Öffnungsstellung BA, wozu er wie oben erläutert axial auf das Bedienelement 28 drückt und dieses in Fig. 8 nach unten bewegt und dann das Bedienelement 28 wieder loslässt. Fig. 10 zeigt die Ventilvorrichtung bei abgeschlossenem Öffnungsvorgang.

Nun führt der Benutzer den Betätigungsstab 31 in die Einführöffnung 18 ein und durch den fluchtenden Durchlass 18a hindurch, so dass der Betätigungsstab 31, wie aus Fig. 12 ersichtlich, den Bewegungsweg der den Magneten 22 haltenden Magnethalterung 23 blockiert, indem er mit seinem eingefügten Endbereich in Fig. 12 unter der Magnethalterung 23 liegt. Dadurch wird die Magnethalterung 23 in ihrer oberen Anschlagposition oder in der Nähe derselben festgehalten und kann vom nach unten drückenden Betätigungsglied 5a nicht weiterbewegt werden. Das Betätigungsglied 5a kommt folglich zum Stillstand, sobald es seinen optionalen Leerhub LH zurückgelegt hat und gegen die Anschlagfläche 23a der blockierten Magnethalterung 23 zur Anlage kommt. Dabei fungieren der Ventilgehäusekörper 8 und die Drehübertragungshülse 13 als der unbewegte Ventilvorrichtungsteil 30, gegen den sich der Blockierstab 31 abstützen kann, um den bewegten Betätigungsteil 5 in seiner Axialbewegung zu blockieren. Dadurch bleibt die Ventilschließkörpereinheit 1 in dieser Sonderbetriebsart in ihrer Sonderbetrieb-Ventiloffenstellung VA2.

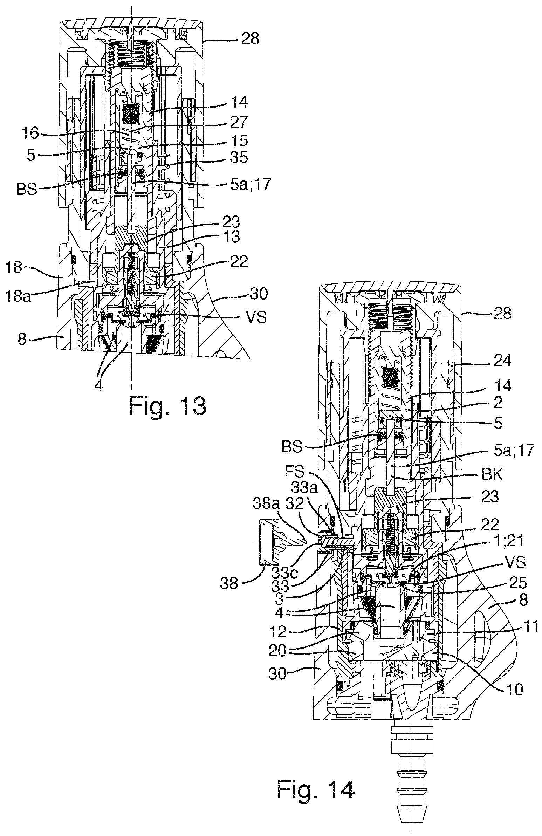

Um die Blockiereinheit 3 von ihrer Blockierstellung BL wieder in ihre Freigabestellung FS zu bringen, führt der Benutzer den Blockierstab 31 wieder aus der Einführöffnung 18 heraus, wodurch die mechanische Blockade der Bewegung der Magnethalterung 23 in Ventilschließrichtung durch den Blockierstab 31 aufgehoben ist, so dass die Ventilbetätigungseinheit 2 anschließend selbsttätig in ihre Schließstellung BS gelangen kann, in der sie die Ventilschließkörpereinheit 1 in der Ventilschließstellung VS hält, wie in Fig. 13 gezeigt. In der Ventilschließstellung VS liegt der Membranventilkörper 21 wieder dicht gegen den Ventilsitz 25 an.

In einer vorteilhaften Ausführung der Selbstschlussventilvorrichtung und speziell der Blockiereinheit 3, wie sie in den Fig. 14 bis 21 gezeigt ist, weist der Ventilgehäusekörper 8 eine Werkzeug-Einführöffnung 32 auf, und das Blockierelement 3a beinhaltet einen Blockierstift 33, der am unbewegten Ventilvorrichtungsteil 30 zwischen einer Blockierstift-Freigabestellung 33a und einer Blockierstift-Blockierstellung 33b verlagerbar gehalten ist und eine der Werkzeug-Einführöffnung 32 zugewandte Werkzeugschnittstelle 33c aufweist.

Mit Ausnahme des Blockierbetriebs, d.h. der Sonderbetriebsart, entspricht die Funktionsweise dieser Ausführungsvariante vollständig derjenigen der oben zu den Fig. 1 bis 13 erläuterten Realisierungen, wobei in den Fig. 14 bis 21 ebenso wie in den übrigen Figuren für identische und funktionell äquivalente Komponenten jeweils gleiche Bezugszeichen verwendet sind. Die Sonderbetriebsart für das Ausführungsbeispiel der Fig. 14 bis 21 entspricht im Wesentlichen derjenigen des Ausführungsbeispiels der Fig. 7 bis 13, worauf insoweit verwiesen werden kann, so dass nachstehend vor allem auf die Unterschiede eingegangen wird.

Bei der Ventilvorrichtung der Fig. 14 bis 21 ist der Blockierstift 33 über eine die Werkzeug-Einführöffnung 32 definierende, am Ventilgehäusekörper 8 festgelegte Führungshülse 34 axial zwischen der Blockierstift-Freigabestellung 33a und der Blockierstift-Blockierstellung 33b verschieblich gehalten, wobei er von einer Rückstellfeder 36, die sich gegen ein Anschlagelement 37 abstützt, in seine Freigabestellung 33a vorgespannt ist. An der Werkzeugschnittstelle 33c kann ein zugehöriges Werkzeug 38 mit korrespondierender Schnittstelle 38a dergestalt angreifen, dass der Blockierstift 33 in seiner Führungshülse 34 axial vorgedrückt und dann zwecks Verrastung in der vorgedrückten Stellung um einen vorgegebenen Rastwinkel von z.B. 60° gedreht werden kann. Die beiden zusammenwirkenden Schnittstellen 33c, 38a können zu diesem Zweck beispielsweise als herkömmliche Mehrkant-Schnittstellen ausgeführt sein. Die Verrastung ist im gezeigten Beispiel dadurch realisiert, dass eine am Blockierstift 33 radial abkragende Rastnase 33d, die in einer korrespondierenden Axialnut der Führungshülse 34 geführt ist, eine am Umfang der Führungshülse 34 ausgebildete Rastfläche 34a bzw. Rastkante hintergreift. Die Rastfläche 34a kann beispielsweise dadurch realisiert sein, dass die Führungshülse 34 mit einer Umfangsnut oder mit einem Fensterbereich versehen ist, in den die Rastnase 33d des Blockierstifts 33 durch Verdrehen hineingelangen kann, wenn sich die Blockierstift 33 in seiner vorgeschobenen Blockierstellung 33b befindet.

Abgesehen von dieser Verrastungsmöglichkeit und der integrierten Halterung des Blockierstifts 33 im bzw. am Ventilgehäusekörper 8 entspricht der Blockierbetrieb für dieses Ausführungsbeispiel im Wesentlichen dem oben erläuterten Blockierbetrieb des Ausführungsbeispiels der Fig. 7 bis 13. In der Ventilschließstellung BS gemäß Fig. 14 verbringt der Benutzer zunächst die Fluidmischeinheit 20 in die betreffende Endlage, z.B. die Warmwasser-Endlage, in welcher der auch bei diesem Ausführungsbeispiel vorgesehene Durchlass 18a für das Vorschieben des Blockierstifts 33 freiliegt, während er in anderen Stellungen der Fluidmischeinheit 20 bzw. der zugehörigen Mischbedieneinheit 24 abgedeckt bzw. abgesperrt ist, z.B. durch die Drehübertragungshülse 13. Fig. 16 zeigt die Ventilvorrichtung in diesem Zustand.

Anschließend verbringt der Benutzer die Ventilbetätigungseinheit 2 von ihrer Schließstellung BS in ihre Öffnungsstellung BA, wozu er wie oben erläutert axial auf das Bedienelement 28 drückt und dieses in Fig. 16 nach unten bewegt und dann das Bedienelement 28 wieder loslässt. Fig. 17 zeigt die Ventilvorrichtung bei abgeschlossenem Öffnungsvorgang, bei dem der Membranventilkörper 21 von seinem Ventilsitz 25 abgehoben ist.

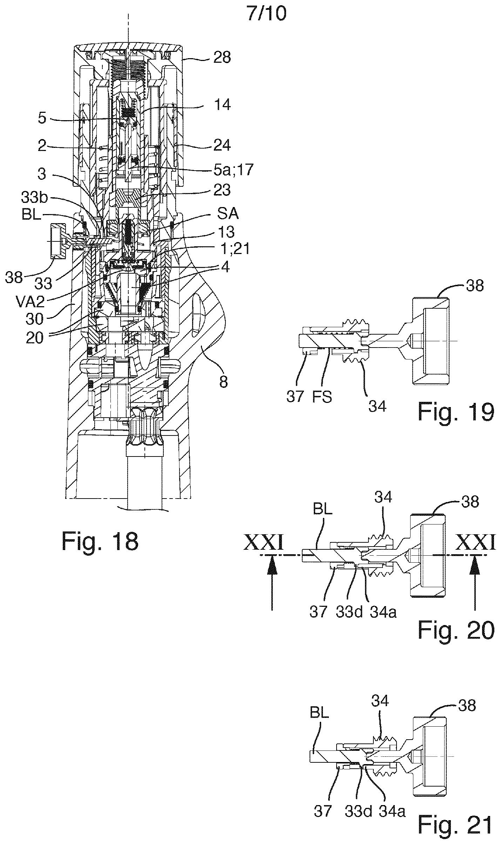

Nun greift der Benutzer das Werkzeug 38 und bringt es mit seiner Schnittstelle 38a in Wirkverbindung mit der Werkzeugschnittstelle 33c des Blockierstifts 33 an der Werkzeug-Einführöffnung 32, wie in Fig. 19 detailliert dargestellt. Dann schiebt er mittels des Werkzeugs 38 den Blockierstift 33 axial vor und damit durch den fluchtenden Durchlass 18a hindurch, so dass der Blockierstift 33, wie aus Fig. 18 ersichtlich, den Bewegungsweg der Magnethalterung 23 blockiert, indem er mit seinem vorgeschobenen Endbereich in Fig. 18 unter der Magnethalterung 33 liegt. In dieser vorgeschobenen Lage des Blockierstifts 33 liegt seine Rastnase 33d zum Verdrehen in der Führungshülse 34 frei, und durch Drehen des Werkzeugs 38 kann der Benutzer den Blockierstift 33 über die drehfeste Kopplung mit dem Werkzeug 38 in seine Rastposition drehen. Der Blockierstift 33 verbleibt dadurch in seiner vorgeschobenen Blockierstellung BL, wie sie in Fig. 18 gezeigt ist, auch wenn er anschließend das Werkzeug 38 vom Blockierstift 33 und der Werkzeug-Einführöffnung 32 abzieht. Die Fig. 20 und 21 zeigen detaillierter die verrastete, vorgeschobene Blockierstellung BL des Blockierstifts 33.

Um die Blockiereinheit 3 von ihrer Blockierstellung BL wieder in ihre Freigabestellung FS zu bringen, führt der Benutzer das Werkzeug 38 mit seiner Schnittstelle 38a wieder in die Werkzeug-Schnittstelle 33c des Blockierstifts 33 ein, dreht den Blockierstift 33 aus seiner Rastposition heraus und zieht dann das Werkzeug 38 axial ab, wodurch der Blockierstift 33 unter der Wirkung der Rückstellfeder 36 wieder in seine axial zurückbewegte Freigabestellung FS gelangt. Dies hebt die mechanische Blockade der Bewegung der Magnethalterung 23 auf, und die Ventilbetätigungseinheit 2 kann dadurch selbsttätig wieder in ihre Schließstellung BS gelangen.

In den Ausführungsbeispielen der Figuren 7 bis 21 blockiert die Blockiereinheit 3 direkt bzw. speziell die Bewegung der Magnethalterung 23 der Pilotventilanordnung als einem Bestandteil des bewegten Betätigungsteils der Ventilbetätigungseinheit 2. In alternativen Ausführungen blockiert die Blockiereinheit 3 direkt bzw. speziell einen anderen Bestandteil des bewegten Betätigungsteils 5a, z.B. das Betätigungsglied 5a bzw. die Kolbenstange 27 oder den Verdrängerkolben 15.

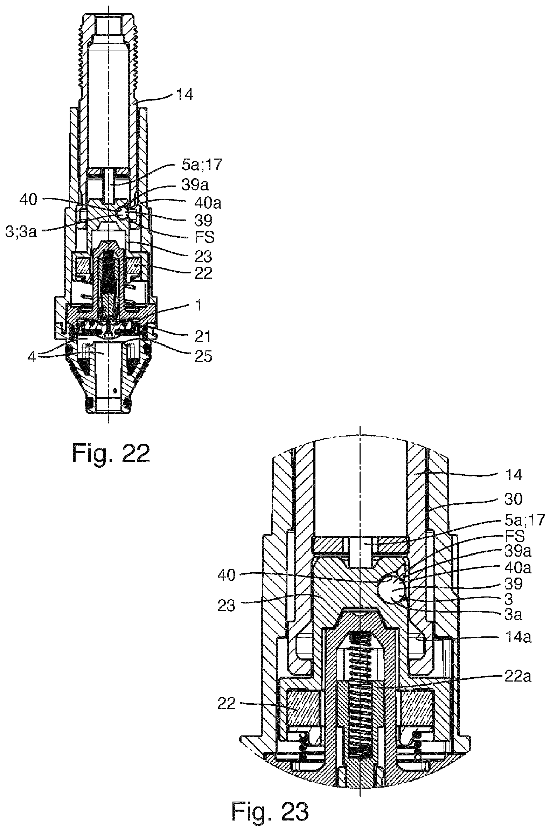

In einer vorteilhaften Ausführung der Selbstschlussventilvorrichtung und speziell der Blockiereinheit 3, wie sie in den Fig. 22 bis 28 gezeigt ist, beinhaltet das Blockierelement 3a einen im Ventilgehäusekörper 8 angeordneten Magnetkörper 39, der durch einen außerhalb des Ventilgehäusekörpers positionierbaren Betätigungsmagneten 40 zwischen einer Magnetkörper-Freigabestellung 39a und einer Magnetkörper-Blockierstellung 39b verlagerbar ist.

Im gezeigten Ausführungsbeispiel ist hierzu speziell in der Magnethalterung 23 der Pilotventilanordnung eine Magnetkörperaufnahme 40 ausgebildet, die über eine Aufnahmeöffnung 40a radial nach außen offen ist. In dieser Aufnahme 40 ist der hier als Magnetkugel ausgebildete Magnetkörper 39 so aufgenommen, dass er aus dieser über deren Aufnahmeöffnung 40a radial heraustreten kann. Der unbewegte Ventilvorrichtungsteil 30, gegenüber dem sich der bewegte Betätigungsteil 5, wie das Betätigungsglied 5a bzw. die Kolbenstange 17, der Verdrängerkolben 15 und die Magnethalterung 23, bei der selbsttätigen Ventilschließbewegung axial bewegt und mit dem die Blockiereinheit 3 zusammenwirkt, beinhaltet hier speziell auch den Hydraulikzylinder 14, der in seiner zurückbewegten Position verbleibt, wenn sich zum selbsttätigen Schließen des Ventils der Verdrängerkolben 15 samt Kolbenstange 17 und Magnethalterung 23 axial vorbewegen. Am Hydraulikzylinder 14 ist in dieser Ausführung eine Magnetkugelausnehmung 14a an seiner Innenseite, z.B. in Form einer geeignet profilierten Ringnut, in einem axialen Abschnitt ausgebildet, der in einer Blockiersituation der Magnetkörperaufnahme 40 der Magnethalterung 23 gegenüberliegt.

Im Ausgangszustand, d.h. in der Ventilschließstellung BS, ist der Magnetkörper 39 vollständig in der Aufnahme 40 aufgenommen, ohne radial vorzustehen, d.h. er befindet sich in seiner Freigabestellung 39a, die in diesem Fall der Freigabestellung FS der Blockiereinheit 3 entspricht. Der Magnetkörper 39 kann in dieser Lage z.B. durch Schwerkraft und/oder geeignete Formung der Magnetkörperaufnahme 40 und/oder durch magnetische Wechselwirkung mit dem oder den Magneten der Pilotventilanordnung, wie dem von der Magnethalterung 23 gehaltenen Magneten 22 und/oder einem mit diesem wechselwirkenden, inneren Pilotventilmagneten 22a, stabil in seiner Freigabestellung 39a gehalten werden.

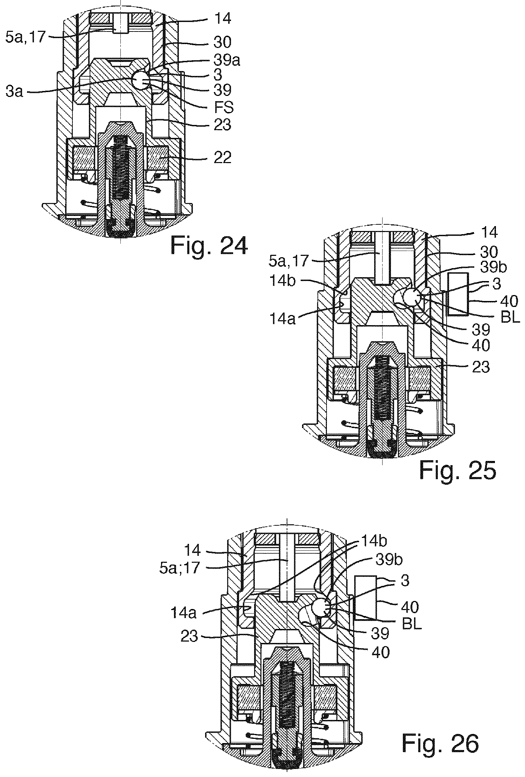

Zur Aktivierung des Blockierbetriebs verbringt der Benutzer zunächst die Ventilbetätigungseinheit 2 von ihrer Schließstellung BS in ihre Öffnungsstellung BA, die in Fig. 22 gezeigt ist. Dazu drückt er, wie oben erläutert, über das Bedienelement 28 den Hydraulikzylinder 14 in den Fig. 22 bis 28 nach unten, wobei Fig. 23 den Hydraulikzylinder 14 in dieser unteren Lage zeigt. Nach Loslassen wird der Hydraulikzylinder 14 wieder gegen seinen oberen Anschlag nach oben gedrückt, und der Verdrängerkolben 15 beginnt sich mit dem Betätigungsglied 5a bzw. der Kolbenstange 17 nach unten zu bewegen, wobei sie zunächst den optionalen Leerhub LH zurücklegen, wie in Fig. 24 gezeigt, bevor dann das Betätigungsglied 5a gegen die Magnethalterung 23 zur Anlage kommt.

Spätestens zu diesem Zeitpunkt kann der Benutzer dann den Magnetkörper 39 radial nach außen aus seiner Aufnahme 40 so weit herausbewegen, dass er in die Magnetkörperausnehmung 14a des Hydraulikzylinders 14 eingreift. Dazu kann der Benutzer einen externen Magneten 40 von außen an den Ventilgehäusekörper 8 so positionieren bzw. anlegen, dass sich der Magnetkörper 39 im magnetischen Wirkbereich des Magneten 40 befindet und von diesem aus seiner Magnetkörperaufnahme 40 herausgezogen wird, wie in Fig. 25 gezeigt.

Indem der Magnetkörper 39 einerseits noch partiell in der Magnetkörperaufnahme 40 der Magnethalterung 23 verbleibt und andererseits partiell in die Magnetkörperausnehmung 14a des Hydraulikzylinders 14 eingreift, blockiert er in dieser Blockierstellung 39b mechanisch die weitere axiale Relativbewegung der Magnethalterung 23 und damit des bewegten Betätigungsteils 5a der Ventilbetätigungseinheit 2 gegenüber dem Hydraulikzylinder 14 und damit dem unbewegten Ventilvorrichtungsteil 30, so dass die selbsttätige Schließbewegung der Ventilbetätigungseinheit 2 in der in Fig. 26 gezeigten Blockierstellung 39b des Magnetkörpers 39 zum Stillstand kommt. Die Ventilschließkörpereinheit 1 bleibt somit in dieser Sonderbetriebsart wiederum wie gewünscht in ihrer Sonderbetrieb-Ventiloffenstellung VA2.

Wie aus Fig. 26 ersichtlich, ist die Magnetkörper-Blockierstellung 39b für den Magnetkörper 39 selbstklemmend und damit selbsthaltend ausgeführt, mit der Folge, dass der Magnetkörper 39 auch dann stabil in seiner Blockierstellung 39b verbleibt, wenn der äußere Magnet 40 entfernt wird. Dies wird zum einen durch die vom Betätigungsglied 5a auf die Magnethalterung 23 ausgeübte, in Fig. 26 nach unten wirkende Druckkraft und zum anderen durch geeignete Formung der Anlageflächen für den Magnetkörper 39 an der Magnetkörperaufnahme 40 und der Magnetkörperausnehmung 14a bewirkt.

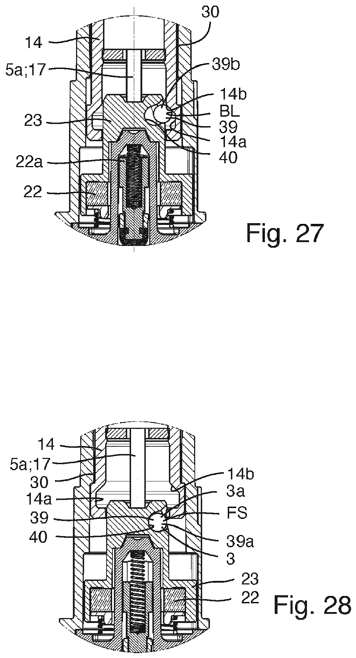

Zur Beendigung des Blockierbetriebs drückt der Benutzer den Hydraulikzylinder 14 wieder in Fig. 26 nach unten, wozu er wie beim normalen Öffnen des Ventils axial auf das Bedienelement 28 drückt. Eine an der Magnetkörperausnehmung 14a axial einwärts ausgebildete Schrägfläche 14b drückt dann beim axialen Vorschieben des Hydraulikzylinders 14 den Magnetkörper 39 aus der Magnetkörperausnehmung 14a heraus radial nach innen wieder in die Magnetkörperaufnahme 40 zurück, wie aus Fig. 27 zu erkennen. Der Magnetkörper 39 gelangt auf diese Weise vollständig in die Aufnahme 40, d.h. in seine Freigabestellung 39a, zurück und wird dort, wie oben erläutert, mittels Schwerkraft und/oder magnetisch stabil gehalten. Dadurch ist die vom Magnetkörper 39 bewirkte mechanische Blockade aufgehoben, und die Ventilbetätigungseinheit 2 kann wieder ungehindert ihre selbsttätige Schließbewegung ausführen, wodurch die Sonderbetriebsart beendet ist und die Ventilschließkörpereinheit 1 wieder ihre Ventilschließstellung VS einnimmt.

In alternativen Ausführungen besitzt der Magnetkörper 39 eine nichtkugelige, z.B. zylindrische Form, und in weiteren alternativen Ausführungen ist die Magnetkörperaufnahme nicht an der Magnethalterung 23 ausgebildet, sondern an einer anderen Komponente des bewegten Betätigungsteils 5, z.B. am Verdrängerkolben 15 oder am Betätigungsglied 5a. In weiteren alternativen Ausführungen befindet sich die Magnetkörperausnehmung 14a nicht am Hydraulikzylinder 14, sondern an einer anderen Komponente des unbewegten Ventilvorrichtungsteils 30, z.B. an der Drehübertragungshülse 13 oder einer Kartuschen- oder Gehäusewandung.

Bei der Ausführungsvariante der Fig. 22 bis 28 kann das Verdrehen der Mischbedieneinheit 24 in eine bestimmte Endlage zur Aktivierung des Blockierbetriebs bei Bedarf entfallen. Dies ist in modifizierten Realisierungen der Ausführungen gemäß den Fig. 7 bis 21 auf Wunsch ebenfalls möglich, wobei in diesen modifizierten Gestaltungen dafür gesorgt ist, dass der Durchgang 18a für das Blockierelement 3a in allen Stellungen der Mischbedieneinheit 24 freiliegt. Umgekehrt kann in einer Modifikation der Ausführungsvariante der Fig. 22 bis 28 durch geeignete Lage und Ausbildung der Magnetkörperaufnahme 40 und der Magnetkörperausnehmung 14a dafür gesorgt sein, dass der Magnetkörper 39 nur in einer bestimmten Stellung der Mischbedieneinheit 24 von seiner Freigabestellung 39a in seine Blockierstellung 39b verbracht werden kann.

Wie die gezeigten und die weiteren oben erläuterten Ausführungsbeispiele deutlich machen, stellt die Erfindung eine vorteilhafte Selbstschlussventilvorrichtung zur Verfügung, die wahlweise die Aktivierung eines Sonderbetriebs ermöglicht, in welchem das Ventil entgegen seiner grundsätzlichen Selbstschlussfunktionalität auch über einen längeren, vom Benutzer gewünschten Zeitraum hinweg andauernd geöffnet bleibt. Dieser Sonderbetrieb ist beispielsweise zur Durchführung thermischer Desinfektionsvorgänge bei sanitären Auslaufarmaturen nutzbringend, wobei erfindungsgemäße Selbstschlussventilvorrichtungen auch in anderen sanitären und nicht-sanitären Anwendungen überall dort nutzbringend Verwendung finden, wo Bedarf an einer Ventilvorrichtung besteht, die im Normalbetrieb selbsttätig schließt und in einer vom Benutzer wählbaren Sonderbetriebsart dauerhaft geöffnet bleibt.

## Patentansprüche

1. Selbstschlussventilvorrichtung, insbesondere selbstschließende sanitäre Mischund Absperrventilvorrichtung, mit
- einer Ventilschließkörpereinheit (1), die zwischen einer Ventilschließstellung (VS) und einer Ventiloffenstellung (VA1) beweglich angeordnet ist,
- einer Ventilbetätigungseinheit (2), die zwischen einer Schließstellung (BS), in der sie die Ventilschließkörpereinheit in deren Ventilschließstellung hält, und einer Öffnungsstellung (BA) beweglich angeordnet ist, in der sie die Ventilschließkörpereinheit in der Ventiloffenstellung hält, wobei sich die Ventilbetätigungseinheit nutzerbetätigt von ihrer Schließstellung in ihre Öffnungsstellung und in einer Normalbetriebsart der Selbstschlussventilvorrichtung selbsttätig von ihrer Öffnungsstellung in ihre Schließstellung bewegt, und
- einer Blockiereinheit (3), die nutzerbetätigt zwischen einer Freigabestellung (FS), in der sie die selbsttätige Bewegung der Ventilbetätigungseinheit (2) von deren Öffnungsstellung (BA) in deren Schließstellung (BS) freigibt, und einer Blockierstellung (BL) verlagerbar ist, in der sie die selbsttätige Bewegung der Ventilbetätigungseinheit von deren Öffnungsstellung in deren Schließstellung in einer Festhaltestellung (SA) blockiert, in der die Ventilbetätigungseinheit in einer Sonderbetriebsart der Selbstschlussventilvorrichtung die Ventilschließkörpereinheit (1) in einer Sonderbetrieb-Ventiloffenstellung (VA2) hält,
- wobei die Ventilbetätigungseinheit einen bewegten Betätigungsteil (5) aufweist, der sich bei der selbsttätigen Bewegung der Ventilbetätigungseinheit von ihrer Öffnungsstellung in ihre Schließstellung relativ zu einem unbewegten Ventilvorrichtungsteil (30) bewegt, und die Blockiereinheit ein nutzerbetätigtes Blockierelement (3a) beinhaltet, das in der Blockierstellung der Blockiereinheit als mechanische Bewegungsblockade zwischen dem bewegten Betätigungsteil und dem unbewegten Ventilvorrichtungsteil wirkt,
**dadurch gekennzeichnet, dass**
- sie einen Ventilgehäusekörper (8) umfasst, der eine Werkzeug-Einführöffnung (32) aufweist, und das Blockierelement einen Blockierstift (33) beinhaltet, der am unbewegten Ventilvorrichtungsteil zwischen einer Blockierstift-Freigabestellung (33a) und einer Blockierstift-Blockierstellung (33b) verlagerbar gehalten ist und eine der Werkzeug-Einführöffnung zugewandte Werkzeugschnittstelle (33c) aufweist, oder
- sie einen Ventilgehäusekörper (8) aufweist und das Blockierelement einen im Ventilgehäusekörper angeordneten Magnetkörper (39) beinhaltet, der durch einen außerhalb des Ventilgehäusekörpers positionierbaren Betätigungsmagneten (40) zwischen einer Magnetkörper-Freigabestellung (39a) und einer Magnetkörper-Blockierstellung (39b) zum blockierenden Zusammenwirken des unbewegten Ventilvorrichtungsteils mit dem bewegten Betätigungsteil verlagerbar ist.

2. Selbstschlussventilvorrichtung nach Anspruch 1, weiter **dadurch gekennzeichnet, dass** die Ventilbetätigungseinheit eine Vorspanneinheit (6), welche die Ventilschließkörpereinheit von ihrer Ventilschließstellung in ihre Ventiloffenstellung durch einen Fluiddruck (6a) und/oder durch ein elastisches Vorspannelement (6b) vorspannt, und ein Betätigungsglied (5a) aufweist, das zwischen einer öffnungsseitigen Endlage und einer schließseitigen Endlage beweglich ist und unidirektional mit der Ventilschließkörpereinheit in Richtung zu deren Ventilschließstellung hin bewegungsgekoppelt ist.

3. Selbstschlussventilvorrichtung nach Anspruch 1 oder 2, weiter **dadurch gekennzeichnet, dass** die Ventilbetätigungseinheit eine Hydraulikdämpfereinheit, die einen nutzerbetätigt axialbeweglich angeordneten Hydraulikzylinder (14) mit einem Kolbenraum (16), einen im Kolbenraum beweglich zwischen einer stationären Kolbenendlage und einer instationären Kolbenendlage angeordneten Verdrängerkolben (15), der den Kolbenraum in zwei Halbräume unterteilt, eine bei Bewegung des Verdrängerkolbens in Richtung seiner instationären Kolbenendlage öffnende und bei Bewegung des Verdrängerkolbens in Richtung seiner stationären Kolbenendlage schließende Hydraulikfluid-Durchlassverbindung zwischen den beiden Halbräumen und eine mindestens bei Bewegung des Verdrängerkolbens in Richtung seiner stationären Kolbenendlage offene Hydraulikfluid-Drosselverbindung zwischen den beiden Halbräumen umfasst, und eine mit dem Verdrängerkolben bewegungsgekoppelte, auf die Ventilschließkörpereinheit wirkende Kolbenstange (17) aufweist.

4. Selbstschlussventilvorrichtung nach einem der Ansprüche 1 bis 3, weiter **dadurch gekennzeichnet, dass** die Ventilschließkörpereinheit einen Membranventilkörper (21) mit magnetbetätigter Pilotventilvorsteuerung umfasst, wobei ein zugehöriger Magnet (22) von einer Magnethalterung (23) gehalten ist, die zu dem bewegten Betätigungsteil gehört.

5. Selbstschlussventilvorrichtung nach einem der Ansprüche 1 bis 4, weiter **dadurch gekennzeichnet, dass**
- sie eine Fluidmischeinheit (20) aufweist, die zur Bildung eines Mischfluids durch Mischung zweier getrennt zugeführter Fluide in einem einstellbaren Mischungsverhältnis und zur Abgabe des Mischfluids eingerichtet ist, und
- die Ventilbetätigungseinheit eine nutzerbetätigte Mischbedieneinheit (24) zur Einstellung des Mischungsverhältnisses umfasst.

6. Selbstschlussventilvorrichtung nach Anspruch 5, weiter **dadurch gekennzeichnet, dass**
- die Fluidmischeinheit einen drehbeweglichen Ventilmischkörper (11) aufweist und
- die Mischbedieneinheit ein drehbewegliches Bedienelement (28) aufweist, das drehfest mit dem drehbeweglichen Ventilmischkörper gekoppelt ist.

## Claims

1. Self-closing valve device, preferably self-closing sanitary mixing and shut-off valve device, comprising
- a valve closing body unit (1) which is disposed to be movable between a valve closed position (VS) and a valve open position (VA1),
- a valve actuation unit (2) which is disposed to be movable between a closed position (BS), in which it retains the valve closing body unit in the valve closed position thereof, and an open position (BA), in which it retains the valve closing body unit in the valve open position, wherein the valve actuation unit moves from its closed position to its open position upon user-operation and moves, in a normal operation mode of the self-closing valve device, from its open position to its closed position in a self-acting manner, and
- a blocking unit (3) which is user-operated displaceable between an enable position (FS), in which it enables the self-acting movement of the valve actuation unit (2) from the open position (BA) thereof to the closed position (BS) thereof, and a blocking position (BL), in which it blocks the self-acting movement of the valve actuation unit from the open position thereof to the closed position thereof in a retaining position (SA), in which the valve actuation unit, in a special operation mode of the self-closing valve device, retains the valve closing body unit (1) in a special operation valve open position (VA2),
- wherein the valve actuation unit comprises a moving actuation part (5) which, during the self-acting movement of the valve actuation unit from its open position to its closed position, moves relative to a non-moving valve device part (30), and the blocking unit comprises a user-operated blocking element (3a) which, in the blocking position of the blocking unit, acts as a mechanical movement blocker between the moving actuation part and the non-moving valve device part,
**characterized in that**
- it comprises a valve housing body (8) which has a tool insertion opening (32), and the blocking element includes a blocking pin (33) which is retained on the non-moving valve device part to be displaceable between a blocking pin unblocked position (33a) and a blocking pin blocked position (33b) and has a tool interface (33c) facing the tool insertion opening, or
- it comprises a valve housing body (8) and the blocking element includes a magnet body (39) disposed in the valve housing body, which magnet body is displaceable between a magnet body enable position (39a) and a magnet body blocked position (39b) for blocking cooperation of the non-moving valve device part with the moving actuation part by means of an actuation magnet (40) which is capable of being positioned outside the valve housing body.

2. Self-closing valve device according to claim 1, further **characterized in that** the valve actuation unit comprises a pretensioning unit (6) to pretension the valve closing body unit from its valve closed position to its valve open position by a fluid pressure (6a) and/or by an elastic pretensioning element (6b), and comprises an actuating member (5a) which is movable between an open-sided end state and a closed-sided end state and is unidirectionally movement-coupled to the valve closing body unit in the direction towards the valve closed position thereof.

3. Self-closing valve device according to claim 1 or 2, further **characterized in that** the valve actuation unit includes a hydraulic damper unit comprising a user-operated axially movable hydraulic cylinder (14) having a piston chamber (16), a displacement piston (15) disposed in the piston chamber to be movable between a stationary piston end state and a transient piston end state, which displacement piston subdivides the piston chamber in two half chambers, a hydraulic fluid passage connection between the two half chambers which opens upon movement of the displacement piston in the direction towards its transient piston end state and closes upon movement of the displacement piston in the direction towards its stationary piston end state, and a hydraulic fluid restrictor connection between the two half chambers which is open at least upon movement of the displacement piston in the direction towards its stationary piston end state, and a piston rod (17) movement-coupled to the displacement piston and acting on the valve closing body unit.

4. Self-closing valve device according to any one of claims 1 to 3, further **characterized in that** the valve closing body unit comprises a diaphragm valve body (21) with solenoid-operated pilot valve control, wherein an associated magnet (22) is held by a magnet holder (23) which belongs to the moving actuation part.

5. Self-closing valve device according to any one of claims 1 to 4, further **characterized in that**
- it includes a fluid mixing unit (20) which is configured for producing a mixing fluid by mixing two separately supplied fluids in a controllable mixing ratio and for discharging the mixing fluid, and
- the valve actuation unit comprises a user-operated mixing control unit (24) for setting the mixing ratio.

6. Self-closing valve device according to claim 5, further **characterized in that**
- the fluid mixing unit includes a rotary valve mixing body (11), and
- the mixing control unit includes a rotary control element (28) which is coupled to the rotary valve mixing body for conjoint rotation.

## Revendications

1. Dispositif de vanne à fermeture automatique, plus particulièrement dispositif de vanne de mélange et d'arrêt sanitaire, avec
- une unité de corps de fermeture de vanne (1), qui est disposée de manière mobile entre une position de fermeture de vanne (VS) et une position d'ouverture de vanne (VA1),
- une unité d'actionnement de vanne (2), qui est disposée de manière mobile entre une position de fermeture (BS), dans laquelle elle maintient l'unité de corps de fermeture de vanne, dans la position de fermeture de vanne, et une position d'ouverture (BA), dans laquelle elle maintient l'unité de corps de fermeture de vanne dans la position d'ouverture de vanne, dans lequel l'unité d'actionnement de vanne est actionnée par l'utilisateur de sa position de fermeture vers sa position d'ouverture et être déplacée, dans un mode de fonctionnement normal du dispositif de vanne à fermeture automatique, automatiquement de sa position d'ouverture vers sa position de fermeture et
- une unité de blocage (3), qui est actionnée par l'utilisateur entre une position de libération (FS), dans laquelle elle libère le mouvement automatique de l'unité d'actionnement de vanne (2) de sa position d'ouverture (BA) vers sa position de fermeture (BS), et une position de blocage (BL), dans laquelle elle bloque le mouvement automatique de l'unité d'actionnement de vanne de sa position d'ouverture vers sa position de fermeture dans une position de maintien (SA), dans laquelle l'unité d'actionnement de vanne maintient, dans un mode de fonctionnement spécial du dispositif de vanne à fermeture automatique, l'unité de corps de fermeture de vanne (1) dans une position d'ouverture de vanne de mode spécial (VA2),
- dans lequel l'unité d'actionnement de vanne comprend une partie d'actionnement mobile (5), qui se déplace, lors du mouvement automatique de l'unité d'actionnement de vanne de sa position d'ouverture vers sa position de fermeture, par rapport à une partie de dispositif de vanne stationnaire (30), et l'unité de blocage contient un élément de blocage actionné par l'utilisateur (3a), qui agit, dans la position de blocage de l'unité de blocage, comme un blocage de mouvement mécanique entre la partie d'actionnement mobile et la partie de dispositif de vanne stationnaire,
**caractérisé en ce que**
- il comprend un corps de boîtier de vanne (8), qui comprend une ouverture d'introduction d'outil (32), et l'élément de blocage contient une tige de blocage (33) qui est maintenue de manière mobile sur la partie de dispositif de vanne stationnaire entre une position de libération de tige de blocage (33a) et une position de blocage de tige de blocage (33b) et comprend une interface d'outil (33c) orientée vers l'ouverture d'introduction d'outil ou
- il comprend un corps de boîtier de vanne (8) et l'élément de blocage contient un corps magnétique (39) disposé dans le corps de boîtier de vanne, qui peut être déplacé, à l'aide d'un aimant d'actionnement (40) pouvant être positionné à l'extérieur du corps de boîtier de vanne, entre une position de libération de corps magnétique (39a) et une position de blocage de corps magnétique (39b) pour l'interaction bloquante de la partie de dispositif de vanne stationnaire avec la partie d'actionnement mobile.

2. Dispositif de vanne à fermeture automatique selon la revendication 1, en outre **caractérisé en ce que** l'unité d'actionnement de vanne comprend une unité de précontrainte (6) qui précontraint l'unité de corps de fermeture de vanne de sa position de fermeture de vanne vers sa position d'ouverture de vanne à l'aide d'une pression de fluide (6a) et/ou à l'aide d'un élément de précontrainte élastique (6b), et comprend un organe d'actionnement (5a) qui peut se déplacer entre une position finale côté ouverture et une position finale côté fermeture et est couplée en mouvement de manière unidirectionnelle avec l'unité de corps de fermeture de vanne en direction de la position de fermeture de vanne.

3. Dispositif de vanne à fermeture automatique selon la revendication 1 ou 2, en outre **caractérisé en ce que** l'unité d'actionnement de vanne comprend une unité d'amortissement hydraulique, qui comprend un vérin hydraulique (14) actionné dans la direction axiale par l'utilisateur, avec un espace de piston (16), un piston alternatif (15) disposé de manière mobile dans l'espace de piston entre une position finale de piston stationnaire et une position finale de piston non stationnaire, qui divise l'espace de piston en deux demi-chambres, une liaison de passage de fluide hydraulique, s'ouvrant lors du déplacement du piston alternatif en direction de sa position finale de piston non stationnaire et se fermant lors du déplacement du piston alternatif en direction de sa position finale de piston stationnaire, entre les deux demi-chambres et une liaison à étranglement de fluide hydraulique ouverte au moins lors du déplacement du piston alternatif en direction de sa position finale de piston stationnaire entre les deux demi-chambres et comprend une tige de piston (17) couplée en mouvement avec le piston alternatif, agissant sur l'unité de corps de fermeture de vanne.

4. Dispositif de vanne à fermeture automatique selon l'une des revendications 1 à 3, en outre **caractérisé en ce que** l'unité de corps de fermeture de vanne comprend un corps de vanne à membrane (21) avec un contrôle de vanne pilote actionné magnétiquement, dans lequel un aimant (22) correspondant est maintenu par un support magnétique (23) qui fait partie de la partie d'actionnement mobile.

5. Dispositif de vanne à fermeture automatique selon l'une des revendications 1 à 4, en outre **caractérisé en ce que**
- il comprend une unité de mélange de fluide (20) qui est conçue pour la formation d'un fluide de mélange par le mélange de deux fluides introduits séparément dans un rapport de mélange ajustable et pour la distribution du fluide de mélange et
- l'unité d'actionnement de vanne comprend une unité de commande de mélange (24) pour l'ajustement du rapport de mélange.

6. Dispositif de vanne à fermeture automatique selon la revendication 5, en outre **caractérisé en ce que**
- l'unité de mélange de fluide comprend un corps de mélange de vanne rotatif (11) et
- l'unité de commande de mélange comprend un élément de commande rotatif (28), qui est couplée de manière solidaire en rotation avec le corps de mélange de vanne rotatif.
